Europäisches Patentamt

European Patent Office

Office européen des brevets

(11) Veröffentlichungsnummer: **0 436 922 A2**

## (12) EUROPÄISCHE PATENTANMELDUNG

(21) Anmeldenummer: 90125378.1

(22) Anmeldetag: 22.12.90

(51) Int. Cl.⁵: **C02F 1/32, C02F 1/72**

(30) Priorität: 09.01.90 DE 4000369

(43) Veröffentlichungstag der Anmeldung:
17.07.91 Patentblatt 91/29

(84) Benannte Vertragsstaaten:
AT BE CH DE FR IT LI LU NL

(71) Anmelder: **LAYER + KNÖDLER
ABWASSERTECHNIK + KUNSTSTOFFBAU
GMBH**
**Max-Eyth-Strasse 19**
**W-7050 Waiblingen(DE)**

(72) Erfinder: **Hinze, Harald**
**Bismarckstrasse 17**
**W-7052 Schwaikheim(DE)**

(74) Vertreter: **Patentanwälte RUFF, BEIER und
SCHÖNDORF**
**Neckarstrasse 50**
**W-7000 Stuttgart 1(DE)**

(54) **Verfahren und Vorrichtung zur Abwasserbehandlung.**

(57) Ein Verfahren zur Behandlung von Abwasser, das schwer abbaubare, insbesondere schwer oxidierbare Bestandteile enthält, beinhaltet die mindestens einmalige Bestrahlung des Abwassers in mindestens einem Verfahrensschritt mit UV-Licht einer UV-Strahlungsquelle. Dabei kann die Bestrahlung in Gegenwart eines Oxidationsmittels, vorzugsweise Wasserstoffperoxid durchgeführt werden. Vor der Bestrahlung kann das Abwasser in einer Fällungs- und/oder Filtrationsstufe vorbehandelt und nach der Bestrahlung in einer Fällungsstufe nachbehandelt werden.

Eine Vorrichtung zur Abwasserbehandlung mit UV-Licht weist mindestens eine UV-Strahlungsquelle auf, die von vorzugsweise in einer Flüssigkeitsleitung geführtem Abwasser umgeben ist. Dabei kann die Flüssigkeitsleitung als Rohrwendel mit dicht aneinanderliegenden Windungen in Längsrichtung um die Strahlungsquelle angeordnet sein. Als Strahlungsquelle kann eine Quecksilber-Hochdrucklampe Verwendung finden.

EP 0 436 922 A2

## VERFAHREN UND VORRICHTUNG ZUR ABWASSERBEHANDLUNG

Die Erfindung betrifft ein Verfahren zur Behandlung von Abwasser, welches schwer abbaubare, insbesondere schwer oxidierbare Bestandteile enthält.

Abwässer enthalten oft Komplexbildner, die mit den im Abwasser enthaltenen Metallen stabile Komplexe bilden können. So bildet beispielsweise Cyanid mit verschiedenen Metallen sehr stabile Komplexe, die mit herkömmlichen Oxidationsmitteln nur unvollständig abgebaut werden können. In gleicher Weise bilden organische Komplexbildner, wie beispielsweise EDTA, NTA, Tartrat, mit Metallen stabile Komplexe. Im Abwasser enthaltene cyclische, acyclische oder aromatische Kohlenwasserstoffe und chlorierte Kohlenwasserstoffe (CKW) können ebenfalls nur mit hohem apparativem Aufwand aus dem Abwasser entfernt werden. Unter die schwer abbaubaren Bestandteile des Abwassers fallen unter anderem auch Farbstoffmoleküle und Tenside. Üblicherweise werden für die Behandlung industrieller Abwässer chlorhaltige Chemikalien, wie beispielsweise Natronbleichlauge, verwendet. Diese Stoffe besitzen stark oxidierende Eigenschaften, und ihre Verwendung ist deshalb mit Nachteilen verbunden. Bei der Oxidation des Abwassers werden nämlich unter anderem auch im Abwasser enthaltene organische Stoffgruppen chloriert. Damit erhöht sich der Anteil der organischen Halogenide im Abwasser, und ein Grenzwert für den sogenannten AOX (Absorbierbare organische Halogenide)-Wert kann unter Umständen nicht eingehalten werden.

Die Erfindung stellt sich die Aufgabe, ein Verfahren zur Abwasserbehandlung zur Verfügung zu stellen, bei dem schwer abbaubare Bestandteile des Abwassers zuverlässig und ohne unerwünschte Nebenwirkungen entfernt werden.

Gelöst wird diese Aufgabe durch ein Verfahren, bei dem das Abwasser in mindestens einem Verfahrensschritt mindestens einmal mit UV-Licht einer UV-Strahlungsquelle bestrahlt wird.

Durch die Bestrahlung mit UV-Licht kann das Abwasser mit relativ geringem Aufwand gereinigt werden, und die bisher nötigen aufwendigen Apparaturen zur Abwasserreinigung können eingespart werden. Auch eine ggf. nötige Entsorgung der im Abwasser enthaltenen schwer abbaubaren Bestandteile als Sondermüll kann vermieden werden. Bei dem erfindungsgemäßen Verfahren wird durch die Bestrahlung mit UV-Licht in geringen Mengen Ozon gebildet, das die schwer abbaubaren Bestandteile des Abwassers oxidiert bzw. spaltet. Durch das Erzeugen des Ozons in situ kann das direkte gefährliche Arbeiten mit Ozon vermieden werden, und auch die mit dem Einsatz von chlorhaltigen Oxidationsmitteln verbundenen Nachteile treten nicht auf. Es ist vorteilhaft, wenn die Bestrahlung mit einer Strahlungsquelle durchgeführt wird, die ein breites Spektrum im ultravioletten Wellenlängenbereich besitzt. Dabei kann der Wellenlängenbereich der Strahlungsquelle zwischen 160 und unter 400 nm und darin bevorzugt zwischen 240 und 370 nm liegen. Es ist zweckmäßig, wenn als Strahlungsquelle mindestens eine Quecksilber-Hochdrucklampe verwendet wird. Diese kann dabei rohrförmig ausgebildet und von einem Quarzglasmantel umschlossen sein. Bevorzugt kann die Leistung der Lampe zwischen 0,5 und 20 kW betragen. Je nach den vorliegenden Verhältnissen kann es zweckmäßig sein, wenn das Abwasser mehrere Male hintereinander mit UV-Licht bestrahlt wird und/oder wenn es während des Verfahrens von mehreren UV-Strahlungsquellen bestrahlt wird. Auf diese Weise wird eine höhere Verweilzeit des Abwassers in der von der UV-Strahlungsquelle bestrahlten Umgebung erreicht.

Das erfindungsgemäße Verfahren ist zur Reinigung von Abwässern geeignet, die schwer abbaubare, insbesondere schwer oxidierbare Bestandteile enthalten. Insbesondere ist es zur Reinigung von Abwässern geeignet, die bei der Behandlung von Metalloberflächen wie beispielsweise beim Galvanisieren entstehen. Weitere bevorzugte Anwendungsgebiete des erfindungsgemäßen Verfahrens liegen bei der Reinigung von Abwässern aus der Textilindustrie (z.B. Färbereien), von Druckereiabwässern (beispielsweise Herstellung von Kartonage-Drucken) und von Abwässern aus Entfettungs- und Entölungsanlagen. Insbesondere können auch Abwässer, die PCB und PCP sowie deren Abkömmlinge enthalten, mit dem erfindungsgemäßen Verfahren behandelt werden, wobei eine Spaltung der genannten Stoffe erreicht wird.

Nach einer bevorzugten Ausführungsform des erfindungsgemäßen Verfahrens wird die Bestrahlung in Gegenwart eines Oxidationsmittels durchgeführt, wobei das Oxidationsmittel dem Abwasser insbesondere vor der Bestrahlung zugegeben wird. Als Oxidationsmittel können übliche, vorzugsweise chlorfreie Oxidationsmittel wie Peroxodisulfate (z.B. Kaliumperoxodisulfat) zugegeben werden. Besonders vorteilhaft ist es, wenn als Oxidationsmittel Wasserstoffperoxid verwendet wird. In diesem Fall werden durch die Zugabe des Oxidationsmittels keine weiteren Stoffe in das Abwasser eingebracht, die eventuell zu Rückständen führen könnten.

Es ist vorteilhaft, während der Bestrahlung alle Teile des Abwasservolumens mit im wesentlichen der gleichen Lichtenergie bzw. Lichtmenge zu bestrahlen. Dies kann dadurch erreicht werden, daß der Abstand zwischen der mindestens einen UV-Strahlungsquelle und dem bestrahlten Medium an allen Stellen im wesentlichen gleichmäßig ist, damit das gesamte Abwasser der gleichen Behandlung unterworfen wird. Bevorzugt beträgt die Schichtdicke, mit der das Abwasser bestrahlt wird, zwischen 0,1 und 50 mm, insbesondere zwischen 1,0 und 20 mm. Vorzugsweise wird das Abwasser vor und/oder während der Bestrahlung über Walzen dünngezogen.

Es ist zweckmäßig, wenn das Abwasser in flüssiger Form, insbesondere in Form einer unter Druck stehenden Flüssigkeit bestrahlt wird. Dabei kann der Überdruck zwischen 0,1 und 3,5 bar betragen. In bestimmten Fällen ist es auch möglich, die Bestrahlung mit einer ruhenden insbesondere drucklosen Flüssigkeit vorzunehmen. In einem solchen Fall wird das Abwasser in Intervallen nacheinander für einen bestimmten Zeitraum bestrahlt. Vorzugsweise ist es auch möglich, das Abwasser vor oder während der Bestrahlung zu vernebeln. Auf diese Weise wird das Abwasser in Form eines Aerosols bestrahlt. Eine Bestrahlung von strömendem Abwasser ist jedoch bevorzugt.

Nach einer bevorzugten Ausführungsform der Erfindung wird vor der Bestrahlung des Abwassers eine Vorbehandlung, insbesondere in einer Fällungs- und/oder Filtrationsstufe durchgeführt. Dies kann dann zu Vorteilen führen, wenn eine ggf. vorhandene Trübung des Abwassers bzw. eine hohe Salzkonzentration im Abwasser die UV-Strahlen zu stark absorbieren und damit die Effektivität des erfindungsgemäßen Verfahrens beeinträchtigen würde. So kann beispielsweise in einer Fällungsstufe eine sogenannte Hydroxidfällung durchgeführt werden, bei der Metalle in Form ihrer Hydroxide ausgefällt werden. Alternativ oder zusätzlich kann in einer Filtrationsstufe eine Filtration an einem geeigneten Filter wie beispielsweise einem Sandfilter vorgenommen werden. Soll die Bestrahlung des Abwassers beispielsweise in Form eines Aerosols durchgeführt werden oder soll die Oxidation durch eine Konzentrationserhöhung des bei der Bestrahlung entstehenden Ozons gesteigert werden, ist es vorteilhaft, wenn das Abwasser vor der Bestrahlung mit Luft gesättigt und/oder zerstäubt wird. Ggf. kann es auch vorteilhaft sein, wenn nach der Bestrahlung eine Nachbehandlung des Abwassers, insbesondere in einer Fällungsstufe durchgeführt wird. Dies hat den Vorteil, daß die beispielsweise beim Abbau der stabilen Komplexe frei werdenden Metallionen aus dem Abwasser entfernt werden. So kann bei der Reinigung von Abwässern, insbesondere solchen, die bei der Kartonage-Druckerei entstehen, zuerst eine Ultrafiltration, dann die Bestrahlung durch eine UV-Strahlungsquelle und eine anschließende Fällungsreaktion durchgeführt werden, wobei vor der Bestrahlung ggf. ein Oxidationsmittel zugegeben wird.

Es ist beim erfindungsgemäßen Verfahren bevorzugt, wenn das Abwasser zur Bestrahlung um mindestens eine, vorzugsweise rohrförmige UV-Strahlungsquelle geführt wird, insbesondere wendelförmig. Beim erfindungsgemäßen Verfahren kann das Verfahren selbst, insbesondere aber der Verfahrensschritt der Bestrahlung mit UV-Licht als Kreislaufprozeß durchgeführt werden.

Die Erfindung betrifft ebenfalls eine Vorrichtung zur Behandlung von Abwasser mit UV-Licht, die insbesondere zur Durchführung des erfindungsgemäßen Verfahrens geeignet ist und bei der zur Bestrahlung mindestens eine UV-Strahlungsquelle mit mindestens einem, vorzugsweise durchströmbaren, Raum zur Aufnahme von Abwasser umgeben ist. Dabei ist die UV-Strahlungsquelle bevorzugt in einen durchströmbaren Behälter gesetzt, insbesondere in das Abwasser eingetaucht. So können in einen Behälter, in dem sich das Abwasser befindet, eine oder mehrere UV-Strahlungsquellen in das Abwasser eingetaucht werden oder es können über geeignete Vorrichtungen in den Wänden oder dem Boden des Behälters eine oder mehrere Strahlungsquellen eingebracht sein, um auf diese Weise eine möglichst gleichmäßige Bestrahlung des Abwassers zu erreichen.

Eine bevorzugte Ausführungsform der erfindungsgemäßen Vorrichtung liegt dann vor, wenn um mindestens eine UV-Strahlungsquelle mindestens eine Flüssigkeitsleitung oder mindestens ein Flüssigkeitsraum so angeordnet ist, daß alle Teile des Abwasservolumens während der Bestrahlung mit im wesentlichen der gleichen Lichtenergie bestrahlt werden.

Die erfindungsgemäße Vorrichtung ist insbesondere dadurch gekennzeichnet, daß die UV-Strahlungsquelle rohrförmig ausgebildet ist. In Weiterbildung ist es bevorzugt, wenn die UV-Strahlungsquelle einen Quarzglasmantel aufweist. Dieser Quarzglasmantel ist für UV-Licht durchlässig, temperaturstabil sowie beständig gegen aggressive Chemikalien wie beispielsweise Fluß- oder Phosphorsäure. Während der Bestrahlung kann sich die Temperatur des Abwassers erhöhen, wobei je nach den gewählten Verfahrensbedingungen beispielsweise Temperaturen von bis zu 100°C erreicht werden können. Je nachdem, mit welcher Temperatur das Abwasser in der Praxis in den Verfahrensschritt der UV-Bestrahlung eintritt, kann eine Abkühlung oder Aufheizung des Abwassers vor oder während der Bestrahlung zweckmäßig sein. Zur Kühlung der Strahlungsquelle während des Betriebs kann diese so ausgestaltet sein, daß eine Luft- oder Wasserkühlung möglich ist. Ggf. kann die Strahlungsquelle auch so ausgebildet sein, daß sie mit Inertgas gespült werden kann. Auch eine Kühlung durch das Abwasser kann bevorzugt sein. Die Strahlungsquelle kann weiterhin als Wendel, beispielsweise mäanderförmig ausgebildet sein. Dies ist insbesondere dann zweckmäßig, wenn Abwasserflächen wie beispielsweise bei einer Behandlung mit Walzen bestrahlt werden

3

sollen.

Weist die Vorrichtung mindestens eine Flüssigkeitsleitung auf, so ist es vorteilhaft, wenn mehrere Flüssigkeitsleitungen in Längsrichtung parallel um die Strahlungsquelle angeordnet sind. Nach einer weiteren bevorzugten Ausführungsform ist mindestens eine Flüssigkeitsleitung so angeordnet, daß sie in Form einer Rohrwendel mit dicht aneinander liegenden Windungen in Längsrichtung um die Strahlungsquelle gelegt ist. Insbesondere ist auch eine Ausführungsform bevorzugt, bei der die Flüssigkeitsleitung als mindestens eine, vorzugsweise koaxiale Hülse um die Strahlungsquelle ausgebildet ist. Die genannten Ausführungsformen ermöglichen es auf besonders gute Weise, daß alle Teile des Abwasservolumens während der Bestrahlung mit im wesentlichen der gleichen Lichtenergie bestrahlt werden.

Weiterhin können nach der Erfindung vorzugsweise mehrere Strahlungsquellen, insbesondere ringförmig, um eine Flüssigkeitsleitung ("Mittelrohr"), durch die das Abwasser geführt wird, angeordnet sein. Dabei kann die Flüssigkeitsleitung gewunden, beispielsweise wendelförmig ausgebildet sein, um die Bestrahlung eines möglichst großen Abwasservolumens zu erreichen. Die Flüssigkeitsleitung kann auch in Form eines Überlaufrohres vorliegen, wobei das Abwasser sowohl beim Durchströmen des Rohrinneren als auch nach dem Ausströmen aus dem Überlauf in Form eines dünnen, an der Außenseite des Rohres herabfließenden Flüssigkeitsfilmes bestrahlt wird.

Eine erfindungsgemäße Vorrichtung, die mindestens eine Flüssigkeitsleitung aufweist, kann zweckmäßig auch als Rohrbündel ausgebildet sein, wobei mehrere Strahlungsquellen und mehrere Flüssigkeitsleitungen im wesentlichen parallel nebeneinander abwechselnd angeordnet sind. Betrachtet man die Querschnittsfläche eines solchen Rohrbündels, so sind in beiden Querdimensionen Strahlungsquellen und Flüssigkeitsleitungen so nebeneinander angeordnet, daß eine möglichst gute Raum- bzw. Flächenausnutzung gegeben ist und eine Flüssigkeitsleitung von möglichst vielen Strahlungsquellen gleichzeitig bestrahlt wird. Sind die Strahlungsquellen und Flüssigkeitsleitungen beispielsweise in parallelen Reihen neben- und übereinander angeordnet, so ist bei versetzter Anordnung der Reihen jede Flüssigkeitsleitung von mindestens vier Strahlungsquellen umgeben und umgekehrt. Die Vorrichtung kann dabei so ausgebildet sein, daß die Flüssigkeitsleitungen nur in einer Richtung durchströmt werden oder daß die Flüssigkeitsleitungen abwechselnd im Gegenstrom an der Strahlungsquelle vorbeigeführt werden. Es können auch parallel nebeneinander liegende Strahlungsquellen so angeordnet sein, daß das Abwasser in Querrichtung zwischen ihnen und um sie geführt werden kann.

Das von der Flüssigkeitsleitung bzw. den Flüssigkeitsleitungen um die Strahlungsquelle eingeschlossene Volumen kann eine Schichtdicke, insbesondere eine radiale Schichtdicke zwischen 0,1 und 50 mm, insbesondere 1,0 und 20 mm aufweisen. Die Strahlungsquelle, insbesondere der Quarzglasmantel ist in Länge und ggf. Außendurchmesser dem zu behandelnden Medium angepaßt. Dabei betragen die Abmessungen der Strahlungsquelle bzw. insbesondere ihres Quarzglasmantels in Längsrichtung zweckmäßig zwischen 0,1 bis 3 m, insbesondere 1,5 bis 2,5 m. Handelt es sich um eine rohrförmige Strahlungsquelle, so besitzt diese einen Außendurchmesser von 20 bis 50 cm, insbesondere 30 bis 40 cm. Als Strahlungsquelle ist insbesondere eine Quecksilber-Hochdrucklampe vorgesehen.

Zur Verbesserung der Bestrahlung kann es vorteilhaft sein, die Vorrichtung mit einem Hüllenrohr aus reflektierendem Material wie beispielsweise Edelstahl, der ggf. poliert ist, zu umgeben. Auf diese Weise wird die Lichtenergie, mit der das Abwasser bestrahlt wird, erhöht.

In einer bevorzugten Ausführungsform ist die erfindungsgemäße Vorrichtung dadurch gekennzeichnet, daß die mindestens eine UV-Strahlungsquelle zwischen einem ersten Behälter, insbesondere einem Vorratsbehälter, und einem zweiten Behälter, insbesondere einem Auffangbehälter, angeordnet ist, wobei der erste Behälter mit der UV-Strahlungsquelle und diese mit dem zweiten Behälter über geeignete Verbindungsleitungen miteinander verbunden sind, sich am ersten Behälter eine Zuführleitung zur Zuleitung des Abwassers und am zweiten Behälter eine Abführleitung zur Ableitung des Wassers befinden und im Verlauf der Verbindungsleitungen eine Förderpumpe und ggf. mindestens ein Strömungsmesser und mindestens ein Ventil bzw. Schieber zur Bestimmung und Regulierung der Durchflußmenge angeordnet sind. Dabei kann insbesondere an der Zuführleitung, dem ersten Behälter und/oder der Verbindungsleitung mindestens ein Anschluß für die Zuleitung weiterer Stoffe, insbesondere eines Oxidationsmittels, vorgesehen sein. Dadurch kann der betreffende Stoff vor der Bestrahlung dem Abwasser zugegeben werden. In Weiterbildung ist die Zuführleitung mit einer Fällungs- und/oder Filtriereinrichtung bzw. die Abführleitung mit einer Fällungseinrichtung verbunden. Dadurch ist es möglich, das Abwasser vor bzw. nach der Bestrahlung einer weiteren Behandlung zu unterwerfen. In Weiterbildung kann die Vorrichtung dadurch gekennzeichnet sein, daß die Abführleitung am zweiten Behälter als Rückführleitung ausgebildet ist oder sich am zweiten Behälter zusätzlich eine Rückführleitung befindet. Dabei ist die Rückführleitung jeweils zur Rückführung des Abwassers in den ersten Behälter und/oder in die Verbindungsleitungen vorgesehen. Durch dieses Merkmal wird es möglich, eine Ruckführungdes Abwassers und damit einen Kreislaufprozeß

4

zu ermöglichen. Bei einer bevorzugten Vorrichtung ist es vorgesehen, daß die Verbindungsleitung zwischen dem ersten Behälter und der UV-Strahlunsquelle über eine weitere Verbindungsleitung zusätzlich mit dem ersten Behälter verbunden ist. Dadurch kann ggf. überschüssiges Abwasser in den ersten Behälter zurückgeleitet werden.

Die folgenden Beispiele zeigen bevorzugte Ausführungsformen der Erfindung. Dabei können die einzelnen Merkmale jeweils für sich alleine oder in Kombination miteinander bei einer Ausführungsform der Erfindung verwirklicht sein.

Dabei zeigen

Fig. 1    eine schematische Darstellung einer erfindungsgemäßen Vorrichtung
Fig. 2    eine Darstellung einer UV-Strahlungsquelle nach der Erfindung, die von einer Flüssigkeitsleitung umgeben ist.

Bei einer Vorrichtung ist zwischen einem Flüssigkeits-Vorratsbehälter 1 für Abwasser und einem Auffangbehälter 2 eine UV-Strahlungsquelle 3 angeordnet, wobei der Vorratsbehälter 1 mit einem Rührwerk 4 versehen ist. Der Vorratsbehälter 1 ist mit der Strahlungsquelle 3 über eine Verbindungsleitung 5 verbunden, in deren Verlauf sich eine Flüssigkeitspumpe 6 zur Förderung des Abwassers, ein Durchflußmesser 7 und zwei Schieber 8 und 9 zur Regulierung der Durchflußmenge befinden. Die Strahlungsquelle 3 ist mit dem Auffangbehälter 2 über eine Verbindungsleitung 10 verbunden, aus der eine Ablaßleitung 11 abzweigt, welche am Ende mit einem Schieber 12 versehen ist. Die Verbindungsleitung 5 ist über eine weitere Verbindungsleitung 13 zusätzlich mit dem Vorratsbehälter 1 verbunden, so daß eine Rückführung des Abwassers aus der Verbindungsleitung 5 in den Vorratsbehälter 1 ermöglicht wird. Zum Öffnen bzw. Schließen der Verbindungsleitung 13 weist diese einen Schieber 14 auf. Am Vorratsbehälter 1 befindet sich eine Zuführleitung 15, durch die das Abwasser in den Vorratsbehälter 1 eingebracht wird. Die Zuführleitung 15 weist einen Anschluß 16 auf, über den die Zuleitung eines Oxidationsmittels möglich ist. Der Auffangbehälter 2 besitzt eine mit einem Schieber 18 versehene Abführleitung 17, durch die das Abwasser aus dem Auffangbehälter 2 abgelassen werden kann oder zur Ausbildung eines Kreisprozesses in den Vorratsbehälter oder in eine der Verbindungsleitungen eingeleitet werden kann.

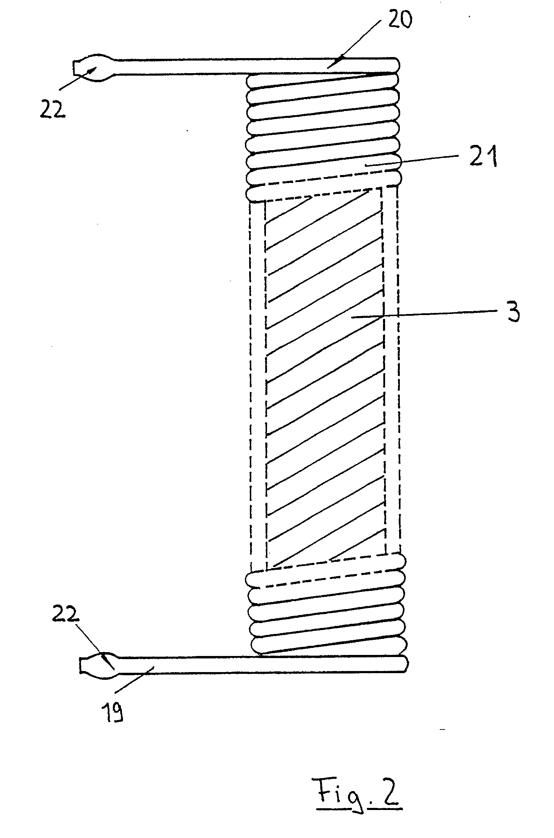

In Figur 2 ist schematisch als UV-Strahlungsquelle ein Quarzbrenner 3 von 40 mm Außendurchmesser und 150 mm Länge dargestellt, die von einer Flüssigkeitsleitung 19 in Form einer Rohrwendel 20 umgeben ist. Dabei besteht die Flüssigkeitsleitung 19 aus Quarzglas, deren einzelne Windungen 21 dicht aneinanderliegen und mit einem geringen Steigungswinkel um die Strahlungsquelle 3 gewickelt sind. An beiden Enden der Rohrwendel 20 befinden sich Anschlüsse 22, über die die Rohrwendel beispielsweise mit den Verbindungsleitungen 5 und 10 verbindbar ist. Der Innendurchmesser der Leitung 19 kann je nach Art der zu behandelnden Flüssigkeit bei 5, 10 oder 15 mm liegen. Die Rohrwendel 20 kann eng um die Strahlungsquelle angeordnet sein. Es kann auch ein Zwischenraum für ein Kühlmedium vorgesehen sein. Die Leistung des Brenners beträgt 1,5 kW und läßt sich durch entsprechend längere Brenner erhöhen.

Beispiel 1

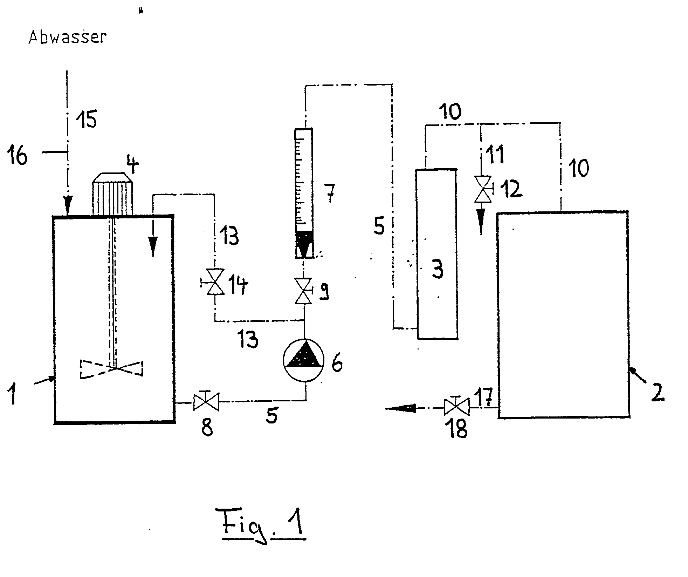

Ein erfindungsgemäßes Verfahren wird mit der in Figur 1 dargestellten Vorrichtung durchgeführt. Dabei wird das Abwasser über die Zuführleitung in den Vorratsbehälter 1 eingebracht und mit Hilfe des Rührwerkes 4 gut durchmischt. Anschließend wird die UV-Strahlungsquelle in Betrieb genommen, und das Abwasser wird mit Hilfe der Pumpe 6 durch die Verbindungsleitung 5 an der Strahlungsquelle 3 vorbeigeleitet. Zum Vorbeileiten des Abwassers kann beispielsweise eine Flüssigkeitsleitung 19 verwendet werden, die in der in Figur 2 dargestellten Weise um die Strahlungsquelle 3 angeordnet ist. Das Abwasservolumen, das an der Strahlungsquelle 3 vorbeigeleitet wird, wird mit Hilfe des Durchflußmessers 7 und der Schieber 8 und 9 eingestellt. Eine ggf. auftretende Mehrleistung der Förderpumpe 6 wird über die Verbindungsleitung 13 und durch Betätigen des Schiebers 14 in den Vorratsbehälter 1 zurückgeleitet. Als Strahlungsquelle 3 wird eine rohrförmige Quecksilber-Hochdrucklampe mit einer Leistung von 1,5 kW benutzt, die von einem Quarzglasmantel umgeben ist. Über die Ablaßleitung 11 und den Schieber 12 besteht zusätzlich die Möglichkeit, während der Durchführung des Verfahrens Abwasserproben zu entnehmen. Nach der Bestrahlung wird das behandelte Abwasser in den Auffangbehälter 2 geleitet.

Das in Beispiel 1 verwendete Abwasser war cyanidhaltig und besaß eine Ausgangskonzentration an Cyanid von 20 mg CN-/1 Abwasser. Das Abwasser wurde auf einen ph-Wert von $\geq$ 10 eingestellt, um ein Entweichen von Blausäure zu vermeiden. Dieses Abwasser wurde mit verschiedenen Durchflußgeschwindigkeiten an der UV-Strahlungsquelle vorbeigeleitet und nach einmaliger Bestrahlung wurde die Cyanid- Konzentration im behandelten Abwasser gemessen. Es wurden die in der folgenden Tabelle dargestellten

Ergebnisse erhalten:

| Durchflußge-schwindigkeit (l/h) | Bestrahlungszeit (min) | CN⁻-Konzentration (mg/l) |
|---|---|---|
| 50 | 4,8 | > 0,001 |
| 100 | 2,4 | > 0,1 |
| 200 | 1,2 | 0,75 |
| 500 | 0,48 | 4,5 |
| 1000 | 0,24 | 8,2 |
| 2000 | 0,12 | 15,0 |

Die Ergebnisse zeigen, daß bei einer nicht zu großen Durchflußgeschwindigkeit ein vollständiger Abbau des im Abwasser enthaltenen Cyanids bzw. der Cyanid-Komplexe möglich ist. Bis zu einer Durchflußgeschwindigkeit von 200 l/h ist bei der in Figur 1 dargestellten Vorrichtung eine optimale Behandlung möglich.

Beispiel 2

Beispiel 2 wurde wie Beispiel 1 durchgeführt. Als Abwasser wurde ein Abwasser verwendet, das eine EDTA-Konzentration von 70 mg EDTA/l Abwasser besitzt. Zusätzlich wurde zum Abwasser über den Anschluß 16 Wasserstoffperoxid in einer Konzentration von 1 l 30%-iges $H_2O_2$ auf 100 l Abwasser zugegeben. Nach einmaliger Bestrahlung wurden die in der folgenden Tabelle dargestellten Ergebnisse erhalten.

| Durchflußge-schwindigkeit (l/h) | Bestrahlungszeit (min) | EDTA-Konzentration (mg/l) |
|---|---|---|
| 50 | 4,8 | > 0,1 |
| 100 | 2,4 | > 0,1 |
| 200 | 1,2 | 1,1 |
| 500 | 0,48 | 16,0 |
| 1000 | 0,24 | 32,0 |
| 2000 | 0,12 | 45,0 |

Auch hier zeigt sich, daß bei nicht zu hohen Durchflußgeschwindigkeiten sehr gute Behandlungsergebnisse erhalten werden können. Auch hier liegt bei der verwendeten Vorrichtung die optimale Durchflußgeschwindigkeit unter ca. 200 l/h.

Beispiel 3

Beispiel 3 wird wie Beispiel 2 durchgeführt. Als Abwasser wird ein Abwasser, das 90 mg Methylenchlorid/l Abwasser enthält, verwendet. Über den Anschluß 16 wurde die gleiche Menge Wasserstoffperoxid wie sie in Beispiel 2 verwendet wurde, in den Vorratsbehälter zugegeben. Es wurden die folgenden Ergebnisse erhalten:

EP 0 436 922 A2

| Durchflußge-schwindigkeit (1/h) | Bestrahlungszeit (min) | $CH_2Cl_2$-Konzentration (mg/l) |
|---|---|---|
| 50 | 4,8 | > 0,1 |
| 100 | 2,4 | 1,3 |
| 200 | 1,2 | 9,1 |
| 500 | 0,48 | 36,0 |
| 1000 | 0,24 | 60,0 |
| 2000 | 0,12 | 64,0 |

Auch bei dem in diesem Beispiel verwendeten chlorierten Kohlenwasserstoff zeigt sich, daß bei nicht zu großen Durchflußgeschwindigkeiten sehr gute Behandlungsergebnisse erhalten werden können.

Für alle drei Beispiele gilt, daß bereits bei einer Bestrahlung die Konzentration an schwer abbaubaren Bestandteilen des Abwassers wesentlich reduziert werden kann. Wenn die Behandlung in einem Bestrahlungsschritt nicht ausreicht, ist es ohne weiteres möglich, die Bestrahlung mehrere Male hintereinander durchzuführen bzw. mehrere UV-Strahlungsquellen hintereinander zu schalten und das Abwasser an diesem vorbeizuführen. Auf diese Weise wird die Verweilzeit des Abwassers an der Strahlungsquelle erhöht.

**Patentansprüche**

1. Verfahren zur Behandlung von Abwasser, welches schwer abbaubare, insbesondere schwer oxidierbare Bestandteile enthält, dadurch gekennzeichnet, daß das Abwasser in mindestens einem Verfahrensschritt mindestens einmal mit UV-Licht einer UV-Strahlungsquelle (3) bestrahlt wird.

2. Verfahren nach Anspruch 1, dadurch gekennzeichnet, daß die Bestrahlung in Gegenwart eines Oxidationsmittels, vorzugsweise Wasserstoffperoxid, durchgeführt wird, das insbesondere vor der Bestrahlung dem Abwasser zugegeben wird.

3. Verfahren nach Anspruch 1 oder 2, dadurch gekennzeichnet, daß alle Teile des Abwasservolumens während der Bestrahlung mit im wesentlichen der gleichen Lichtenergie bestrahlt werden.

4. Verfahren nach einem der vorhergehenden Ansprüche, dadurch gekennzeichnet, daß das Abwasser in einer Schichtdicke zwischen 0,1 und 50 mm, insbesondere 1,0 und 20 mm bestrahlt wird.

5. Verfahren nach einem der vorhergehenden Ansprüche, dadurch gekennzeichnet, daß das Abwasser vor und/oder während der Bestrahlung über Walzen dünngezogen wird.

6. Verfahren nach einem der vorhergehenden Ansprüche, dadurch gekennzeichnet, daß vor der Bestrahlung eine Vorbehandlung des Abwassers, insbesondere in einer Fällungs- und/oder Filtrationsstufe durchgeführt wird und/oder nach der Bestrahlung eine Nachbehandlung des Abwassers, insbesondere in einer Fällungsstufe durchgeführt wird.

7. Verfahren nach einem der vorhergehenden Ansprüche, dadurch gekennzeichnet, daß das Abwasser in Form eines Aerosols bestrahlt wird, wobei insbesondere das Abwasser vor der Bestrahlung mit Luft gesättigt und/oder zerstäubt wird.

8. Verfahren nach einem der vorhergehenden Ansprüche, dadurch gekennzeichnet, daß das Abwasser zur Bestrahlung, insbesondere wendelförmig, um mindestens eine, vorzugsweise rohrförmige UV-Strahlungsquelle (3) geführt wird.

9. Verfahren nach einem der vorhergehenden Ansprüche, dadurch gekennzeichnet, daß mindestens der Verfahrensschritt der Bestrahlung als Kreislaufprozeß durchgeführt wird.

10. Vorrichtung zur Behandlung von Abwasser mit UV-Licht, insbesondere zur Durchführung des Verfahrens nach einem der Ansprüche 1 bis 9, dadurch gekennzeichnet, daß zur Bestrahlung mindestens eine, insbesondere einen Quarzglasmantel aufweisende UV-Strahlungsquelle (3) mit mindestens einem Raum zur Aufnahme von Abwasser umgeben ist.

11. Vorrichtung nach Anspruch 10, dadurch gekennzeichnet, daß mindestens eine UV-Strahlungsquelle (3) in einen durchströmbaren Behälter gesetzt, insbesondere in das Abwasser eingetaucht ist.

12. Vorrichtung nach Anspruch 10, dadurch gekennzeichnet, daß um mindestens eine UV-Strahlungsquelle (3) mindestens eine Flüssigkeitsleitung (19) so angeordnet ist, daß alle Teile des Abwasservolumens während der Bestrahlung mit im wesentlichen der gleichen Lichtenergie bestrahlt werden.

13. Vorrichtung nach einem der Ansprüche 10 bis 12, dadurch gekennzeichnet, daß die UV-Strahlungsquelle (3) rohrförmig ausgebildet ist.

14. Vorrichtung nach einem der Ansprüche 10 bis 13, dadurch gekennzeichnet, daß mehrere Flüssigkeitsleitungen (19) in Längsrichtung parallel um die Strahlungsquelle (3) angeordnet sind.

15. Vorrichtung nach einem der Ansprüche 10 bis 13, dadurch gekennzeichnet, daß mindestens eine Flüssigkeitsleitung (19) als Rohrwendel (20) mit dicht aneinanderliegenden Windungen (21) um die Strahlungsquelle (3) angeordnet ist.

16. Vorrichtung nach einem der Ansprüche 10 bis 13, dadurch gekennzeichnet, daß mindestens eine Flüssigkeitsleitung (19) als mindestens eine, vorzugsweise koaxiale Hülse um die Strahlungsquelle (3) ausgebildet ist.

17. Vorrichtung nach einem der Ansprüche 12 bis 16, dadurch gekennzeichnet, daß sie als Rohrbündel ausgebildet ist, wobei mehrere Strahlungsquellen (3) und mehrere Flüssigkeitsleitungen (19) abwechselnd angeordnet sind.

18. Vorrichtung nach einem der Ansprüche 12 bis 17, dadurch gekennzeichnet, daß das von der mindestens einen Flüssigkeitsleitung (19) um die Strahlungsquelle (3) eingeschlossene Volumen eine Schichtdicke, insbesondere eine radiale Schichtdicke zwischen 0,1 und 50 mm, insbesondere 1,0 und 20 mm aufweist.

19. Vorrichtung nach einem der Ansprüche 10 bis 18, dadurch gekennzeichnet, daß die Strahlungsquelle (3), insbesondere der Quarzglasmantel in Länge und Außendurchmesser dem zu behandelnden Medium angepaßt ist, wobei vorzugsweise die Strahlungsquelle (3), insbesondere der Quarzglasmantel eine Länge von 0,1 bis 3 m, insbesondere 1,5 bis 2,5 m und einen Außendurchmesser von 20 bis 50 cm, insbesondere 30 bis 40 cm besitzt.

20. Vorrichtung nach einem der Ansprüche 10 bis 19, dadurch gekennzeichnet, daß die mindestens eine UV-Strahlungsquelle (3) zwischen einem ersten Behälter, insbesondere einem Vorratsbehälter (1), und einem zweiten Behälter, insbesondere einem Auffangbehälter (2), angeordnet ist, wobei der erste Behälter (1) mit der UV-Strahlungsquelle (3) und diese mit dem zweiten Behälter (2) über geeignete Verbindungsleitungen (5, 10) miteinander verbunden sind, sich am ersten Behälter (1) eine Zuführleitung (15) zur Zuleitung des Abwassers und am zweiten Behälter (2) eine Abführleitung (17) zur Ableitung des Abwassers befinden und im Verlauf der Verbindungsleitungen (5, 10) eine Förderpumpe (6) und ggf. mindestens ein Stömungsmesser (7) und mindestens ein Ventil (8, 9) angeordnet sind, wobei insbesondere an der Zuführleitung (15), dem ersten Behälter (1) und/oder der Verbindungsleitung (5, 10) mindestens ein Anschluß (16) für die Zuleitung weiterer Stoffe, insbesondere eines Oxidationsmittels vorgesehen ist.

21. Vorrichtung nach Anspruch 20, dadurch gekennzeichnet, daß die Zuführleitung (15) mit einer Fällungs- und/oder Filtriereinrichtung verbunden ist und/oder die Abführleitung (17) mit einer Fällungseinrichtung verbunden ist.

22. Vorrichtung nach Anspruch 20 oder 21, dadurch gekennzeichnet, daß die Abführleitung (17) am zweiten Behälter (2) als Rückführleitung ausgebildet ist oder sich am zweiten Behälter zusätzlich eine Rückführleitung befindet, wobei die Rückführleitung jeweils zur Rückführung des Abwassers in den ersten Behälter (1) und/oder in die Verbindungsleitungen (5, 13, 15) vor der UV-Strahlungsquelle vorgesehen ist.

23. Vorrichtung nach einem der Ansprüche 20 bis 22, dadurch gekennzeichnet, daß die Verbindungsleitung (5) zwischen dem ersten Behälter (1) und der UV-Strahlungsquelle (3) über eine weitere Verbindungsleitung (13) zur Rückführung von Abwasser zusätzlich mit dem ersten Behälter (1) verbunden ist.

Abwasser

Fig. 1

Fig. 2